Europäisches Patentamt

European Patent Office

Office européen des brevets

(19)

(11) **EP 1 602 014 B1**

(12) **EUROPÄISCHE PATENTSCHRIFT**

(45) Veröffentlichungstag und Bekanntmachung des Hinweises auf die Patenterteilung:
**04.10.2006 Patentblatt 2006/40**

(21) Anmeldenummer: **04713046.3**

(22) Anmeldetag: **20.02.2004**

(51) Int Cl.:
*G05B 19/23* *(2006.01)*

(86) Internationale Anmeldenummer:
**PCT/EP2004/001649**

(87) Internationale Veröffentlichungsnummer:
**WO 2004/081681 (23.09.2004 Gazette 2004/39)**

(54) **VERFAHREN UND VORRICHTUNG ZUM STEUERN EINES TORANTRIEBES**

METHOD AND DEVICE FOR CONTROLLING A DOOR/GATE DRIVE

PROCEDE ET DISPOSITIF DE COMMANDE D'UN ENTRAINEMENT DE PORTE

(84) Benannte Vertragsstaaten:
**AT BE CH DE ES FR GB GR HU IT LI NL PT TR**

(30) Priorität: **11.03.2003 DE 10310480**

(43) Veröffentlichungstag der Anmeldung:
**07.12.2005 Patentblatt 2005/49**

(73) Patentinhaber: **Sommer Antriebs- und
Funktechnik GmbH
73230 Kirchheim/Teck (DE)**

(72) Erfinder: **SOMMER, Frank
73265 Dettingen/Teck (DE)**

(74) Vertreter: **Ruckh, Rainer Gerhard
Fabrikstrasse 18
73277 Owen/Teck (DE)**

(56) Entgegenhaltungen:
**WO-A-00/42687          WO-A-01/18624
DE-A- 4 214 998          DE-A- 19 628 238
DE-A- 19 700 828**

**EP 1 602 014 B1**

**Beschreibung**

Die Erfindung betrifft ein Verfahren und eine Vorrichtung zum Steuern eines Torantriebs.

Ein derartiges Verfahren ist aus der DE 196 28 238 A1 bekannt. Mit diesem Verfahren wird als Sicherheitsfunktion für einen Torantrieb eine sogenannte Kraftabschaltung bereitgestellt. Dies bedeutet, dass der Torantrieb bei Auftreten eines erhöhten Kraftbedarfs, der insbesondere dadurch entsteht, wenn ein Objekt oder eine Person das mit dem Torantrieb angetriebene Tor blockiert, gestoppt wird, um Verletzungen von Personen oder Beschädigungen von Objekten zu vermeiden.

Gemäß diesem Verfahren erfolgt vor der Inbetriebnahme des Torantriebs ein Messdurchlauf, bei welchem der tatsächliche Kraftbedarf des Torantriebs über den Verfahrweg ermittelt wird. Dabei umfasst der Messdurchlauf wenigstens jeweils einen kompletten Öffnungs- und Schließzyklus des Torantriebs.

Der Torantrieb weist einen Elektromotor auf, mit welchem das Tor, insbesondere ein Garagentor angetrieben wird. Der Kraftbedarf des Torantriebs wird durch Bestimmung des Drehmoments des Elektromotors ermittelt. Der Messdurchlauf wird mit konstanter, maximaler Geschwindigkeit, ohne Geschwindigkeitsreduzierung am Ende des Bewegungsweges des Tores durchgeführt.

Der Öffnungsvorgang und der Schließvorgang des Torantriebs werden jeweils in eine vorgegebene Anzahl von Zonen unterteilt, wobei die Dauer jeder Zone in Abhängigkeit der bestimmten Drehmomente festgelegt werden kann. Innerhalb jeder Zone wird ein zulässiges Maximal-Drehmoment definiert. Die Maximal-Drehmomente werden für die einzelnen Zonen derart bestimmt, dass das zulässige Maximal-Drehmoment wenigstens gleich groß ist wie das größte, während des Messdurchlaufs innerhalb der jeweiligen Zone aufgetretene Drehmoment.

Während des anschließenden Betriebs des Torantriebs werden die aktuell registrierten Drehmomente mit den jeweiligen Maximal-Drehmomenten der jeweiligen Zonen verglichen. Überschreitet das aktuelle Drehmoment das Maximal-Drehmoment der jeweiligen Zone, erfolgt ein Notstopp des Torantriebs.

Vorteilhaft bei diesem Verfahren ist, dass mit relativ geringem Steuerungsaufwand eine Sicherheitsfunktion für einen Torantrieb bereitgestellt wird.

Insbesondere ist vorteilhaft, dass durch die Einteilung der Öffnungs- und Schließvorgänge des Torantriebs in einzelne Zonen nur ein geringer Steuerungsaufwand zur Bereitstellung der Sicherheitsfunktion erforderlich ist.

Durch die Zoneneinteilung der Öffnungs- und Schließvorgänge erfolgt eine grobe Rastereinteilung dieser Bewegungsabläufe. Dabei wird jeder Zone nur ein Messwert in Form des zulässigen Maximal-Drehmoments als Abschaltkriterium für den Torantrieb zugeordnet.

Zur Steuerung des Torantriebs werden daher nur wenige Messpunkte benötigt, wodurch die Steuerung mit geringem Aufwand und entsprechend schnell durchgeführt werden kann.

Nachteilig hierbei ist jedoch eine unerwünscht große Ansprechzeit der Steuerung. Je nach Lage eines aktuell ermittelten Drehmoments innerhalb einer Zone und relativ zu dem zulässigen Maximal-Drehmoment kann bei Eingriff eines Hindernisses in das Tor eine erhebliche Zeitdauer verstreichen, bis das aktuelle Drehmoment das zulässige Maximal-Drehmoment überschreitet. Dadurch entstehen unerwünscht hohe Verzögerungszeiten bei der Auslösung des Not-Stopps, die zu Gefährdungen von Personen führen können. Weiterhin sind bei der Installation von Torantrieben Normvorschriften zu beachten, die Grenzwerte für diese Verzögerungszeiten definieren. Die Einhaltung derartiger Normvorschriften ist bei dem Verfahren gemäß der DE 196 28 238 A1 problematisch.

Der Erfindung liegt die Aufgabe zugrunde ein Verfahren und eine Vorrichtung der eingangs genannten Art so auszubilden, dass mit möglichst geringem Aufwand eine sichere Steuerung eines Torantriebs gewährleistet ist.

Zur Lösung dieser Aufgabe sind die Merkmale der Ansprüche 1 und 12 vorgesehen. Vorteilhafte Ausführungsformen und zweckmäßige Weiterbildungen der Erfindung sind in den Unteransprüchen beschrieben.

Bei dem erfindungsgemäßen Verfahren zum Steuern eines elektrischen Torantriebs erfolgt zunächst während eines Einlernvorgangs die Bestimmung des zeitlichen Verlaufs der Drehmomente des Torantriebs für jeweils wenigstens einen Öffnungs- und Schließvorgang. Dann werden zulässige Maximal- Drehmomente aus den ermittelten Drehmomenten für vorgegebene Zonen innerhalb eines Öffnungs- und Schließvorganges abgeleitet. Während des anschließenden Betriebs des Torantriebs erfolgt ein Vergleich der aktuellen Drehmomente mit den Maximal-Drehmomenten und ein Vergleich der aktuellen Geschwindigkeiten des Torantriebs mit vorgegebenen Soll-Geschwindigkeiten. Dabei wird die aktuelle Geschwindigkeit des Torantriebes bei Unterschreiten der zugeordneten Soll-Geschwindigkeit erhöht und der Torantrieb abgeschaltet, falls das aktuelle Drehmoment das zugeordnete Maximal-Drehmoment übersteigt.

Bei dem erfindungsgemäßen Verfahren werden somit als Abschaltkriterium für den Torantrieb innerhalb der einzelnen Zonen des Öffnungs- und Schließvorgangs Maximal-Drehmomente definiert, wobei ein Not-Stopp des Torantriebs dann erfolgt, wenn das aktuelle Drehmoment des Torantriebs das jeweilige Maximal-Drehmoment überschreitet.

Erfindungsgemäß wird diese Abschaltkontrolle mit einer Kontrolle der Geschwindigkeit des Torantriebs kombiniert. Besonders vorteilhaft wird dabei die Geschwindigkeit des Torantriebs auf ein Soll-Geschwindigkeitsprofil geregelt.

Durch diese Kombination wird erreicht, dass die Steuerung des Torantriebs nicht nur ein sicheres sondern auch ein hinreichend schnelles Ansprechen der Kraftabschaltung gewährleistet.

Liegt ein Eingriff eines Hindernisses in dem zu steuernden Tor vor, so wird nicht nur der Kraftbedarf des Torantriebs erhöht, der einer Drehmomenterhöhung entspricht. Vielmehr sinkt dabei gleichzeitig auch die Drehzahl des Torantriebs, was einer Reduzierung der Geschwindigkeit entspricht, so dass die aktuelle Geschwindigkeit unter die jeweils vorgegebene Soll-Geschwindigkeit absinkt.

Erfindungsgemäß wird hierauf die aktuelle Geschwindigkeit erhöht, wobei diese vorzugsweise auf die Soll-Geschwindigkeit geregelt wird. Dadurch wird nicht nur die Drehzahl des Torantriebs erhöht, sondern über die Spannung des Torantriebs auch die Stromstärke und damit das Drehmoment des Torantriebs.

Dadurch wird bei einem bleibenden Hinderniseingriff erreicht, dass das aktuelle Drehmoment rasch erhöht wird und dementsprechend schnell das zulässige Maximal-Drehmoment überschreitet. Damit wird eine äußerst kurze Ansprechzeit der Kraftabschaltung erhalten, wodurch einerseits Gefährdungen für Personen und Objekte sicher vermieden werden und zudem die geltenden Normvorschriften für die Kraftabschaltung eingehalten werden können.

Bei einer kurzfristigen Drehmomenterhöhung, die zum Beispiel durch zusätzliche Reibung in der Führung des Tores bei Verschmutzungen oder dergleichen entstehen kann, wird durch eine kurzfristige Geschwindigkeitserhöhung das Hindernis überwunden, ohne dass die Kraftabschaltung aktiviert wird. Dadurch wird die Verfügbarkeit des Torantriebs erhöht.

Die Erfindung wird im Nachstehenden anhand der Zeichnungen erläutert. Es zeigen:

Figur 1: Schematische Darstellung einer Vorrichtung zur Steuerung eines Torantriebs.

Figur 2: Schematische Darstellung des zeitlichen Drehmomentenverlaufs des Torantriebs gemäß Figur 1 für einen Öffnungsvorgang.

Figur 3: Schematische Darstellung des zeitlichen Drehmomentenverlaufs des Torantriebs gemäß Figur 1 für einen Schließvorgang.

Figur 4: Schematische Darstellung des Geschwindigkeitsprofils des Torantriebs gemäß Figur 1 für einen Öffnungsvorgang.

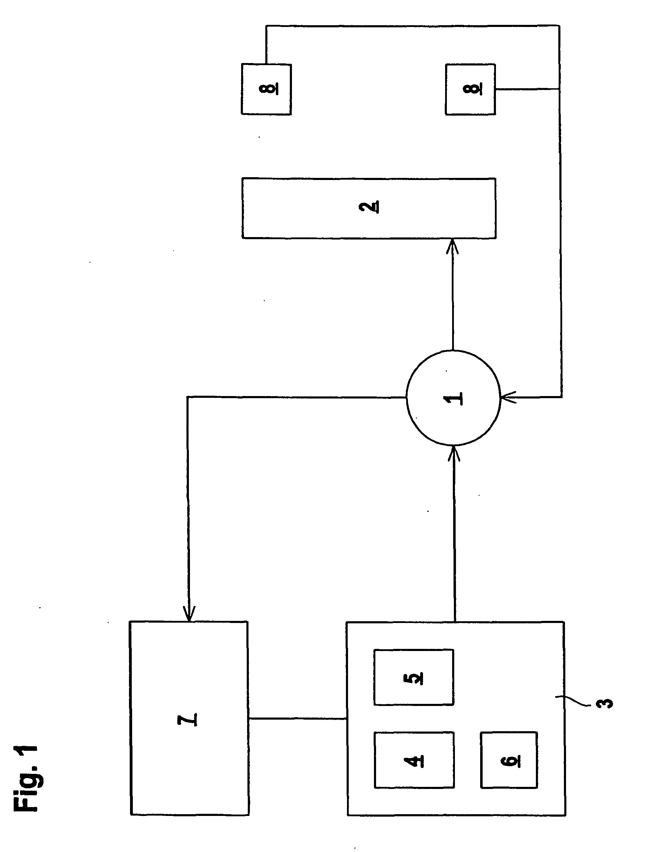

Figur 1 zeigt den Aufbau einer Vorrichtung zum Steuern eines Torantriebs 1. Der Torantrieb 1 besteht im Wesentlichen aus einem Elektromotor, der ein Tor 2 antreibt. Das Tor 2 ist im vorliegenden Fall von einem Garagentor gebildet.

Zur Steuerung des Torantriebs 1 ist eine Rechnereinheit 3 vorgesehen, die allgemein von einem Mikroprozessorsystem gebildet ist. In der Rechnereinheit 3 ist eine Speichereinheit 4 zur Speicherung von Daten und Parametern vorgesehen. Weiterhin weist die Rechnereinheit 3 eine Reglereinheit 5 auf, mittels der die Geschwindigkeit des Torantriebs 1 geregelt wird. Schließlich weist die Rechnereinheit 3 eine Zeitmesseinheit 6 auf, welche im Wesentlichen einen Taktoszillator zur Vorgabe eines Zeittaktes aufweist.

An die Rechnereinheit 3 ist eine Messeinheit 7 angeschlossen. In der Messeinheit 7 sind Mittel zur Bestimmung des Drehmoments sowie Mittel zur Bestimmung der Geschwindigkeit des Torantriebs 1 vorgesehen.

Die Mittel zur Bestimmung des Drehmoments des Torantriebs 1 sind im Wesentlichen von einer Messschaltung gebildet, mittels derer die dem Elektromotor zugeführte Stromstärke gemessen wird, welche ein Maß für das Drehmoment des Torantriebs 1 bildet. Die Drehmomentbestimmung ist allgemein als Bestimmung des Kraftbedarfs auszulegen, wobei der Begriff Drehmomentbestimmung generell für die Bestimmung einer Kenngröße für diesen Kraftbedarf verwendet wird.

Die Mittel zur Bestimmung der Geschwindigkeit des Torantriebs 1 sind im Wesentlichen von einer Messschaltung gebildet, mittels derer die Drehzahl des Elektromotors erfasst wird.

In Kombination der Zeitmesseinheit 6 der Rechnereinheit 3 kann mittels der Messeinheit 7 sowohl der zeitliche Verlauf der Geschwindigkeit als auch der Drehmomentenverlauf des Torantriebs 1 bestimmt werden.

Das Tor 2 kann zwischen einer oberen und unteren Endlage bewegt werden, wobei zur Kontrolle der Endlagen Endschalter 8 vorgesehen sind, dessen Signale auf dem Torantrieb 1 geführt sind.

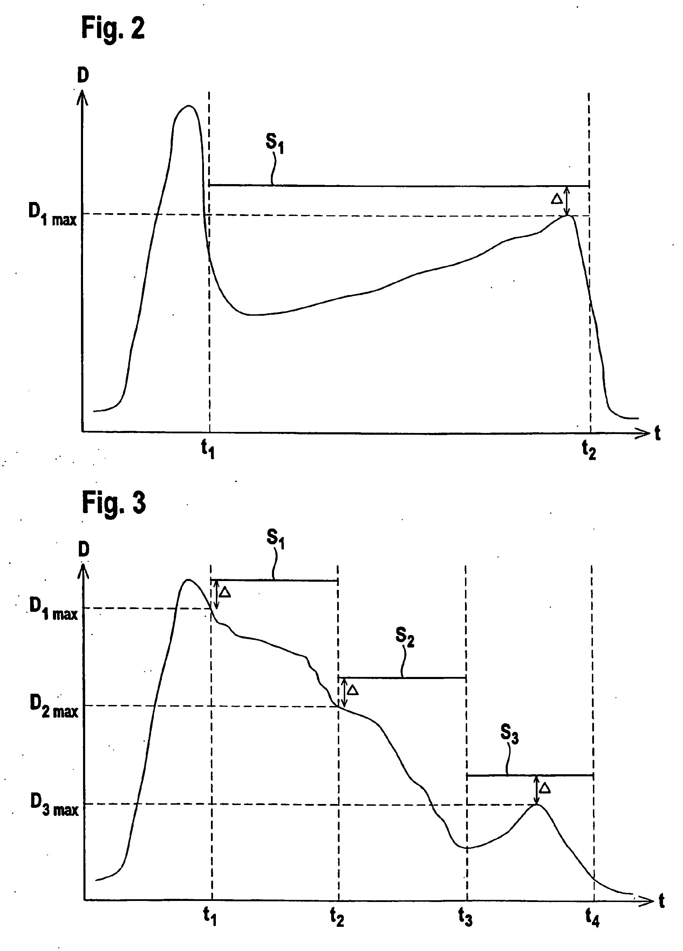

Figur 2 zeigt schematisch den zeitlichen Drehmomentenverlauf des Torantriebs 1 während eines Öffnungsvorgangs, d. h. während der Bewegung des Tores 2 aus der unteren in die obere Endlage. Entsprechend zeigt Figur 3 den zeitlichen Drehmomentenverlauf des Torantriebs 1 während eines Schließvorganges, d. h. während der Bewegung des Tores 2 aus der oberen in die untere Endlage.

Wie aus den Figuren 2 und 3 ersichtlich, ist das Drehmoment des Torantriebs 1 in der Anlaufphase zu Beginn eines Öffnung- und Schließvorgangs stark erhöht. Bei dem in Figur 2 dargestellten Öffnungsvorgang fällt das Drehmoment nach der Anlaufphase stark ab und steigt dann im Wesentlichen kontinuierlich an. Da der Torantrieb 1 in seiner oberen Endlage mittels des Endschalters 8 abgeschaltet wird, wird am Ende des Öffnungsvorgangs ein Peak des Drehmomentenverlaufs, wie er bei der Anlaufphase auftritt, vermieden. Bei dem in Figur 3 dargestellten Schließvorgang fällt das Drehmoment nach der Anlaufphase im Wesentlichen kontinuierlich ab. Auch in diesem Fall wird bei Einfahren des Torantriebs 1 in die untere Endlage durch den Endschalter 8 ein hoher Drehmoment-Peak unterdrückt.

Vor Inbetriebnahme des Torantriebs 1 wird ein Einlernvorgang durchgeführt. Innerhalb des Einlernvorgangs werden aus den Drehmomentenverläufen des Öffnungs- und Schließvorgangs zulässige Maximal-Drehmomente bestimmt, welche als Kriterium für eine Kraftabschaltung während des Betriebs des Torantriebs 1 dienen. Die Kraftabschaltung sieht einen Not-Stopp des Torantriebs 1 für den Fall vor, dass das Tor 2 gegen ein Hindernis läuft.

Während des Einlernvorganges wird mittels der Messeinheit 7 der zeitliche Drehmomentenverlauf sowohl für einen kompletten Öffnungsvorgang als auch für einen kompletten Schließvorgang ermittelt. Prinzipiell kann auch eine Mehrfachbestimmung der Drehmomentenverläufe durchgeführt werden.

Die Drehmomentenverläufe werden jeweils in eine Anzahl von Zonen vorgegebener Zeitdauer unterteilt. Die Anzahl der Zonen sowie die Zeitintervalle, über welche sich die Zonen erstrecken, können applikationsspezifisch für den jeweiligen Torantrieb 1, und angepasst an die jeweiligen Drehmomentenverläufe gewählt werden.

Im vorliegenden Fall wird bei der Zoneneinteilung die Anlaufphase mit dem Drehmomentenpeak während des Öffnungs- und Schließvorgangs ausgespart. Die verbleibenden Drehmomentenverläufe werden in die Zonen unterteilt.

Für den Öffnungsvorgang wird wie in Figur 2 dargestellt nur eine Zone definiert, deren Dauer $T = t_2 - t_1$ sich über den gesamten an die Anlaufphase anschließenden Drehmomentenverlauf erstreckt.

Für den Schließvorgang werden im vorliegenden Fall drei Zonen gleicher Dauer definiert. Die Dauer $T$, der ersten Zone beträgt $T_1 = t_2 - t_1$. Die Dauer der zweiten Zone beträgt $T_2 = t_3 - t_2$. Die Dauer der dritten Zone beträgt $T_3 = t_4 - t_3$.

Innerhalb jeder Zone i wird in der Rechnereinheit 3 das jeweilige maximale Drehmoment $D_{imax}$ bestimmt. Aus diesem Maximalwert wird für die jeweilige Zone i ein Schwellwert $S_i$ bestimmt, welcher das zulässige Maximal-Drehmoment innerhalb dieser Zone bildet. Im vorliegenden Ausführungsbeispiel werden die Schwellwerte $S_i$ für die Zonen i derart definiert, dass zu den maximalen Drehmomenten $D_{imax}$ der einzelnen Zonen jeweils dieselbe positive Konstante $\Delta$ addiert wird. Somit werden die Schwellwerte $S_i$ gemäß folgender Beziehung berechnet:

$$S_i = D_{imax} + \Delta$$

Prinzipiell könnten für die einzelnen Zonen auch variable Größen $\Delta_i$ definiert werden, die zu den jeweiligen Maximalwerten $D_{imax}$ addiert werden.

Im vorliegenden Fall wird als Ergebnis des Einlernvorgangs für die Zone des Öffnungsvorgangs ein Schwellwert $S_1$ als zulässiges Maximal-Drehmoment erhalten. Für die drei Zonen i = 1, 2, 3 des Schließvorganges werden die Schwellwerte $S_1$, $S_2$ und $S_3$ als zulässige Maximal-Drehmomente erhalten.

Während des auf den Einlernvorgang folgenden Betriebs des Torantriebs 1 werden sowohl für den Öffnungs- als auch für den Schließvorgang fortlaufend die aktuellen Drehmomente bestimmt und mit den zulässigen Maximal-Drehmomenten verglichen. Während des Öffnungsvorgangs wird somit das aktuelle Drehmoment mit dem Schwellwert $S_1$ gemäß Figur 2 verglichen. Während des Schließvorgangs wird abhängig davon, in welcher Zone i das aktuelle Drehmoment liegt, dieses mit dem zu dieser Zone gehörenden Schwellwert $S_1$, $S_2$ oder $S_3$ verglichen.

Sobald das aktuelle Drehmoment den jeweils aktuellen Schwellwert $S_i$ überschreitet erfolgt eine Kraftabschaltung, in dem der Torantrieb 1 über einen von der Rechnereinheit 3 generierten Schaltbefehl abgeschaltet wird. In der Rechnereinheit 3 kann ein Schaltausgang integriert sein, welcher ein Schaltmittel bildet, über welches der Schaltbefehl ausgebbar ist. Prinzipiell können auch externe Schaltmittel wie Relais oder dergleichen vorgesehen sein.

Auf diese Weise erfolgt ein wirksamer Schutz von Personen oder Objekten, die in den Torantrieb 1 eintreten und diesen blockieren.

Bei regulärem Betrieb des Torantriebs 1 liegt das aktuelle Drehmoment immer unterhalb der Schwellwerte $S_i$, da diese während des Einlernvorganges aus den Realbedingungen des Torantriebs 1 abgeleitet wurden und zudem so gewählt wurden, dass der Schwellwert $S_i$ einer Zone oberhalb des in der Zone i auftretenden maximalen Drehmoments liegt.

Blockiert ein Hindernis das Tor 2, wird der Kraftbedarf des Torantriebs 1 und damit dessen Drehmoment erhöht, so dass der Wert des Drehmoments oberhalb des jeweiligen Schwellwerts $S_i$ liegt, wodurch die Kraftabschaltung ausgelöst wird.

Je nach Lage des aktuellen Drehmoments innerhalb der jeweiligen Zone verstreicht eine gewisse Zeitspanne, bis die Drehmomenterhöhung infolge eines Hinderniseingriffs zur Auslösung der Kraftabschaltung führt.

Um diese Verzögerungszeit möglichst kurz zu halten, wird bei dem Torantrieb 1 zusätzlich die aktuelle Geschwindigkeit des Torantriebs 1 erfasst und mit vorgegebenen Sollwerten verglichen. Unterschreitet die aktuelle Geschwindigkeit den Sollwert, so wird diese wieder erhöht.

Bei einem Hinderniseingriff in das Tor 2 wird neben einer Drehmomentenerhöhung auch eine Drehzahlverminderung und damit eine Geschwindigkeitsreduzierung des Torantriebs 1 erhalten. Durch die darauffolgende Erhöhung der Geschwindigkeit des Torantriebs 1 wird die Stromstärke und damit auch das Drehmoment des Torantriebs 1 erhöht. Durch diesen Effekt wird der Drehmomentanstieg bei einem Hinderniseingriff beschleunigt und damit die Verzögerungszeit zwischen dem Beginn des Hindemisseingriffs und der Kraftabschaltung erheblich vermindert. Bei einer kurzzeitigen Drehmomenterhöhung, die zum Beispiel durch Reibungseffekte verursacht wird, bleibt das aktuelle Drehmoment trotz einer kurzen Geschwindigkeitserhöhung unterhalb des jeweiligen Schwellwerts, sodass eine unnötige Kraftabschaltung vermieden wird.

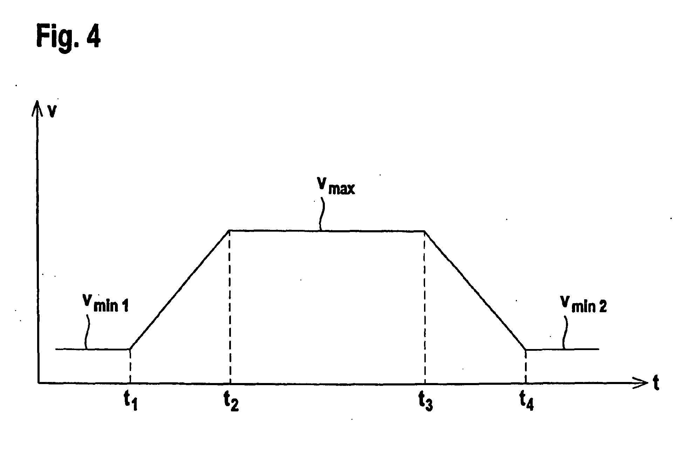

In einer besonders vorteilhaften Ausführungsform wird die Geschwindigkeit des Torantriebs 1 geregelt. Als Sollwerte sind sowohl für den Öffnungs- und Schließvorgang Soll-Geschwindigkeitsprofile vorgegeben. Figur 4 zeigt den zeitlichen Verlauf eines solchen Soll-Geschwindigkeitsprofils für den Öffnungsvorgang des Torantriebs 1. Nach dem Ausfahren des Tores 2 aus seiner unteren Endlage wird der Torantrieb 1 während einer Beschleunigungsphase im Zeitintervall zwischen $t_1$ und $t_2$ mit einer konstanten Beschleunigung von einer Geschwindigkeit $v_{min1}$ auf eine Geschwindigkeit $v_{max}$ beschleunigt. Dann schließt eine Phase an, innerhalb derer die Geschwindigkeit des Torantriebs 1 konstant bei $v_{max}$ gehalten wird. Diese Phase liegt in dem Zeitintervall zwischen $t_2$ und $t_3$. Daran schließt eine Verzögerungsphase im Zeitintervall zwischen $t_3$ und $t_4$ an, innerhalb derer der Torantrieb 1 mit konstanten Geschwindigkeitsgradienten von der Geschwindigkeit $v_{max}$ auf die Geschwindigkeit $v_{min2}$ abgebremst wird. Anschließend wird der Torantrieb 1 in seiner oberen Endlage mittels des Endschalters 8 abgeschaltet. Im vorliegenden Fall sind die Geschwindigkeiten $v_{min1}$ und $v_{min2}$ gleich groß gewählt. Das Soll-Geschwindigkeitsprofil für den Schließvorgang entspricht der Form des Geschwindigkeitsprofils gemäß Figur 4. Lediglich die Absolutwerte für die Soll-Geschwindigkeitswerte sowie die Längen der Phasen definierenden Zeiten $t_1$ - $t_4$ können betragsmäßig variieren.

Dabei sind die Geschwindigkeiten $v_{min1}$, $v_{min2}$ und $v_{max}$ als Geschwindigkeitsparameter zur Vorgabe der Soll-Geschwindigkeitsprofile in der Speichereinheit 4 der Rechnereinheit 3 hinterlegt. Vorzugsweise sind auch die Geschwindigkeitsgradienten während der Beschleunigungs- und Verzögerungsphase in der Speichereinheit 4 hinterlegt.

Die genaue Vorgabe der Soll-Geschwindigkeitsprofile erfolgt zweckmäßig während eines Lernlaufs. Bei diesem Lernlauf wird sowohl während des Öffnungsvorgangs als auch während des Schließvorgangs der Torantrieb 1 innerhalb der vorgegebenen Beschleunigungsphase, wie beispielsweise in Figur 4 dargestellt, von der Geschwindigkeit $V_{min1}$ auf die Geschwindigkeit $V_{max}$ beschleunigt. Anschließend wird der Torantrieb 1 mit konstanter Geschwindigkeit bis in seine Endlage verfahren, wobei die Laufzeit des Torantriebs 1 hierbei erfasst wird. In der Rechnereinheit 3 wird dann aus dieser Laufzeit der Zeitpunkt $t_3$ berechnet, an welchem die Verzögerungsphase einzuleiten ist. Auf diese Weise ist das Soll-Geschwindigkeitsprofil sowohl für den Öffnungsvorgang als auch für den Schließvorgang festgelegt.

Während des Betriebs des Torantriebs 1 wird dann die Geschwindigkeit des Torantriebs 1 mittels der Reglereinheit 5 auf das vorgegebene Soll-Geschwindigkeitsprofil geregelt.

Bezugszeichenliste

(1) Torantrieb
(2) Tor
(3) Rechnereinheit
(4) Speichereinheit
(5) Reglereinheit
(6) Zeitmesseinheit
(7) Messeinheit
(8) Endschalter

**Patentansprüche**

1. Verfahren zum Steuern eines elektrischen Torantriebs umfassend folgende Verfahrensschritte:

   - Bestimmung des zeitlichen Verlaufs der Drehmomente des Torantriebs während eines Einlernvorgangs für jeweils wenigstens einen Öffnungs- und Schließvorgang,
   - Ableiten zulässiger Maximal-Drehmomente aus den ermittelten Drehmomenten für vorgebene Zonen innerhalb eines Öffnungs- und Schließvorganges,
   - Vergleich der aktuellen Drehmomente mit den Maximal-Drehmomenten und Vergleich der aktuellen Geschwindigkeiten des Torantriebs mit vorgegebenen Soll-Geschwindigkeiten während des Betriebs des Torantriebs,
   - Erhöhen der aktuellen Geschwindigkeit des Torantriebes bei Unterschreiten der zugeordneten Soll-Geschwindigkeit,
   - Abschalten des Torantriebs, falls das aktuelle Drehmoment das zugeordnete Maximal-Drehmoment übersteigt.

2. Verfahren nach Anspruch 1, **dadurch gekennzeichnet, dass** für den Öffnungsvorgang und den Schließvorgang jeweils ein Soll-Geschwindigkeitsprofil vorgegeben ist.

3. Verfahren nach Anspruch 2, **dadurch gekennzeichnet, dass** die aktuelle Geschwindigkeit geregelt wird, wobei die Sollwerte des Regelkreises von den Soll-Geschwindigkeitsprofilen gebildet sind.

4. Verfahren nach einem der Ansprüche 2 oder 3, **dadurch gekennzeichnet, dass** die Soll-Geschwindigkeitsprofile durch Geschwindigkeitsparameter definiert werden.

**5.** Verfahren nach Anspruch 4, **dadurch gekennzeichnet, dass** jedes Geschwindigkeitsprofil von einer Beschleunigungsphase mit konstanten Geschwindigkeitsgradienten zur Beschleunigung von einer Geschwindigkeit $v_{min1}$ auf eine Maximalgeschwindigkeit $v_{max}$, von einer darauffolgenden Phase mit konstanter Geschwindigkeit $v_{max}$ und von einer Verzögerungsphase mit konstantem Geschwindigkeitsgradienten zur Abbremsung von der Maximalgeschwindigkeit $v_{max}$ auf eine Geschwindigkeit $v_{min2}$ gebildet ist.

**6.** Verfahren nach Anspruch 5, **dadurch gekennzeichnet, dass** die Geschwindigkeiten $v_{min1}$, $v_{min2}$ und $v_{max}$ die Geschwindigkeitsgradienten sowie die Dauer jeder Phase die Geschwindigkeitsparameter bilden.

**7.** Verfahren nach einem der Ansprüche 5 oder 6, **dadurch gekennzeichnet, dass** zur Bestimmung eines Geschwindigkeitsprofils ein Lernlauf durchgeführt wird, bei welchem der Torantrieb (1) während der Beschleunigungsphase von der Geschwindigkeit $v_{min1}$ auf die Maximalgeschwindigkeit $v_{max}$ beschleunigt wird, wobei der Torantrieb (1) mit dieser Maximalgeschwindigkeit $v_{max}$ in seine Endlage verfahren wird, und dass aus der Laufzeit des Torantriebs (1) der Beginn der Verzögerungsphase berechnet wird.

**8.** Verfahren nach einem der Ansprüche 1-7, **dadurch gekennzeichnet, dass** der Öffnungs- und Schließvorgang jeweils in Zonen gleicher Zeitdauer eingeteilt wird.

**9.** Verfahren nach Anspruch 8, **dadurch gekennzeichnet, dass** der Schließvorgang in mehrere Zonen unterteilt wird.

**10.** Verfahren nach einem der Ansprüche 8 oder 9, **dadurch gekennzeichnet, dass** dem Öffnungsvorgang eine Zone zugewiesen wird.

**11.** Verfahren nach einem der Ansprüche 8-10, **dadurch gekennzeichnet, dass** während des Einlernvorgangs aus den ermittelten Drehmomenten für jede Zone i das maximale Drehmoment $D_{imax}$ bestimmt wird, und dass für jede Zone i als zulässiges Maximal-Drehmoment der Schwellwert $S_i$ gemäß $S_i = D_{imax} + \Delta$ berechnet wird, wobei $\Delta$ eine positive Konstante ist.

**12.** Vorrichtung zum Steuern eines Torantriebs gemäß dem Verfahren nach einem der Ansprüche 1-11, mit Mitteln zur Bestimmung der Drehmomente des Torantriebs (1), mit Mitteln zur Bestimmung der aktuellen Geschwindigkeiten des Torantriebs (1),

und mit einer Rechnereinheit (3), in welcher während eines Einlernvorganges der zeitliche Verlauf der Drehmomente des Torantriebs (1) für jeweils wenigstens einen Öffnung- und Schließvorgang bestimmbar ist,

und in welcher aus den ermittelten Drehmomenten zulässige Maximal-Drehmomente für vorgegebene Zonen innerhalb eines Öffnungs- und Schließvorgangs ableitbar sind,

mit einer Speichereinheit (4) zur Abspeicherung vorgegebener Sollgeschwindigkeiten während des Betriebs des Torantriebs (1),

wobei über die Rechnereinheit (3) ein Steuerbefehl zur Erhöhung der aktuellen Geschwindigkeit des Torantriebs (1) generierbar ist, falls diese während des Betriebs des Torantriebs (1) die zugeordnete Sollgeschwindigkeit unterschreitet,

und mit von der Rechnereinheit (3) gesteuerten Schaltmitteln, wobei in diesen ein Schaltbefehl zum Abschalten des Torantriebs (1) generierbar ist, falls das aktuelle Drehmoment während des Betriebs des Torantriebs (1) das zugeordnete Maximal-Drehmoment übersteigt.

**13.** Vorrichtung nach Anspruch 12, **dadurch gekennzeichnet, dass** der Torantrieb (1) einen Elektromotor aufweist.

**14.** Vorrichtung nach Anspruch 13, **dadurch gekennzeichnet, dass** die Mittel zur Bestimmung des Drehmoments eine Messschaltung zur Bestimmung der Stromstärke des Elektromotors aufweisen.

**15.** Vorrichtung nach einem der Ansprüche 13 oder 14, **dadurch gekennzeichnet, dass** die Mittel zur Bestimmung der Geschwindigkeit des Torantriebs (1) eine Messschaltung zur Bestimmung der Drehzahl des Elektromotors aufweisen.

**16.** Vorrichtung nach einem der Ansprüche 12-15, **dadurch gekennzeichnet, dass** die Rechnereinheit (3) eine Reglereinheit (5) zur Regelung der Geschwindigkeit des Torantriebs (1) aufweist.

**17.** Vorrichtung nach einem der Ansprüche 12-16, **dadurch gekennzeichnet, dass** der Torantrieb (1) Endschalter (8) zu dessen Abschaltung in seinen Endlagen aufweist.

**Claims**

**1.** Method of controlling an electric door drive comprising the following method steps:

- determination of the course over time of the torques of the door drive during a learning process in each instance for at least one opening process and closing process,

- deriving permissible maximum torques from the determined torques for predetermined zones within an opening process and closing process,

- comparison of the instantaneous torques with the maximum torques and comparison of the instantaneous speeds of the door drive with predetermined target speeds during operation of the door drive,

- increasing the instantaneous speed of the door drive when the associated target speed is fallen below and

- switching off the door drive if the instantaneous torque exceeds the associated maximum torque.

2. Method according to claim 1, **characterised in that** a respective target speed profile is predetermined for the opening process and the closing process.

3. Method according to claim 2, **characterised in that** the instantaneous speed is regulated, wherein the target values of the regulating circuit are formed by the target speed profiles.

4. Method according to one of claims 2 and 3, **characterised in that** the target speed profiles are defined by speed parameters.

5. Method according to claim 4, **characterised in that** each speed profile is formed by an acceleration phase with constant speed gradients for acceleration from a speed $V_{min1}$ to a maximum speed $V_{max}$, by a succeeding phase with constant speed $V_{max}$ and by a deceleration phase with constant speed gradients for braking from the maximum speed $v_{max}$ to a speed $v_{min2}$.

6. Method according to claim 5, **characterised in that** the speeds $v_{min1}$, $v_{min2}$ and $v_{max}$ form the speed gradients and the duration of each phase forms the speed parameters.

7. Method according to one of claims 5 and 6, **characterised in that** for determination of a speed profile a learning run is undertaken in which the door drive (1) is accelerated during the acceleration phase from the speed $v_{min1}$ to the maximum speed $v_{max}$, wherein the door drive (1) is moved into its end position at this maximum speed $v_{max}$ and that the start of the deceleration phase is calculated from the running time of the door drive (1).

8. Method according to one of claims 1 to 7, **characterised in that** the opening process and closing process are respectively divided into zones of equal time duration.

9. Method according to claim 8, **characterised in that** the closing process is subdivided into several zones.

10. Method according to one of claims 8 and 9, **characterised in that** one zone is allocated to the opening process.

11. Method according to one of claims 8 to 10, **characterised in that** during the learning process the maximum torque $D_{imax}$ is determined from the ascertained torques for each zone i and that the threshold value $S_i$ is calculated according to $S_i = D_{imax} + \Delta$ for each zone i as permissible maximum torque, wherein $\Delta$ is a positive constant.

12. Device for controlling a door drive according to the method according to one of claims 1 to 11, comprising means for determining the torques of the door drive (1), means for determining the instantaneous speeds of the door drive (1), and a computer unit (3) in which during a learning process the course over time of the torques of the door drive (1) is determinable each time for at least one opening process and closing process, and in which permissible maximum torques for predetermined zones within an opening process and closing process can be derived from the determined torques, a memory unit (4) for storage of predetermined target speeds during operation of the door drive (1), wherein a control command for increasing the instantaneous speed of the door drive (1) can be generated, by way of the computer unit (3), if this falls below the associated target speed during operation of the door drive (1), and switching means controlled by the computer unit (3), wherein a switching command for switching off the door drive (1) can be generated therein if the instantaneous torque during operation of the door drive (1) exceeds the associated maximum torque.

13. Device according to claim 12, **characterised in that** the door drive (1) comprises an electric motor.

14. Device according to claim 13, **characterised in that** the means for determining the torque comprise a measuring circuit for determining the current strength of the electric motor.

15. Device according to one of claims 13 and 14, **characterised in that** the means for determining the speed of the door drive (1) comprises a measuring circuit for determining the speed of the electric motor.

16. Device according to one of claims 12 to 15, **characterised in that** the computer unit (3) comprises a regulator unit (5) for regulating the speed of the door drive (1).

17. Device according to one of claims 12 to 16, **charac-**

**terised in that** the door drive (1) comprises limit switches (8) for switching-off of the drive in its end positions.

**Revendications**

1. Procédé de commande d'un entraînement électrique de porte ou de portail comprenant les étapes de procédé suivantes :

   - détermination de la variation dans le temps des couples de rotation de l'entraînement de porte ou de portail pendant une phase d'apprentissage pour chaque fois au moins un cycle d'ouverture et un cycle de fermeture,
   - déduction à partir des couples de rotation déterminés de couples de rotation maximums admissibles pour des zones prédéfinies à l'intérieur d'un cycle d'ouverture et de fermeture,
   - comparaison des couples de rotation actuels avec les couples de rotation maximums et comparaison des vitesses actuelles de l'entraînement de porte ou de portail avec des vitesses de consigne prédéfinies pendant le fonctionnement de l'entraînement de porte ou de portail,
   - augmentation de la vitesse actuelle de l'entraînement de porte ou de portail lorsqu'on arrive en dessous de la vitesse de consigne associée,
   - arrêt de l'entraînement de porte si le couple de rotation actuel dépasse le couple de rotation maximum associé.

2. Procédé selon la revendication 1, **caractérisé par le fait qu'**un profil de vitesse de consigne est prédéfini chaque fois pour le cycle d'ouverture et le cycle de fermeture.

3. Procédé selon la revendication 2, **caractérisé par le fait que** la vitesse actuelle est régulée, les valeurs de consigne de la boucle de régulation étant formées par les profils de vitesse de consigne.

4. Procédé selon l'une des revendications 2 ou 3, **caractérisé par le fait que** les profils de vitesse de consigne sont définis par des paramètres de vitesse.

5. Procédé selon la revendication 4, **caractérisé par le fait que** chaque profil de vitesse de consigne est formé par une phase d'accélération avec gradient de vitesse constant en vue de l'accélération d'une vitesse $V_{min1}$ à une vitesse maximum $V_{max}$, d'une phase suivante à vitesse constante $V_{max}$ et d'une phase de décélération ou de retardement avec gradient de vitesse constant en vue du ralentissement de la vitesse maximum $V_{max}$ à une vitesse $V_{min2}$.

6. Procédé selon la revendication 5, **caractérisé par le fait que** les vitesses $V_{min1}$, $V_{min2}$ et $V_{max}$, les gradients de vitesse ainsi que la durée de chaque phase forment les paramètres de vitesse.

7. Procédé selon l'une des revendications 5 ou 6, **caractérisé par le fait que** pour déterminer un profil de vitesse on effectue un essai ou cycle d'apprentissage au cours duquel l'entraînement de porte (1) est accéléré de la vitesse $v_{min1}$ à la vitesse maximum $v_{max}$ pendant la phase d'accélération, l'entraînement de porte (1) étant déplacé dans sa position extrême à cette vitesse maximum $v_{max}$, et que l'on calcule le début de la phase de décélération ou de retardement à partir du temps de parcours de l'entraînement de porte (1).

8. Procédé selon l'une des revendications 1 à 7, **caractérisé par le fait que** le cycle d'ouverture et le cycle de fermeture sont divisés chacun en zones de même durée.

9. Procédé selon la revendication 8, **caractérisé par le fait que** le cycle de fermeture est divisé en plusieurs zones.

10. Procédé selon l'une des revendications 8 ou 9, **caractérisé par le fait qu'**une zone est affectée au cycle d'ouverture.

11. Procédé selon l'une des revendications 8 à 10, **caractérisé par le fait que** pendant le cycle d'apprentissage on détermine à partir des couples de rotation déterminés le couple de rotation maximum $D_{imax}$ pour chaque zone i, et que l'on calcule pour chaque zone i en tant que couple de rotation maximum admissible la valeur seuil Si d'après Si = $D_{imax}$ + $\Delta$, $\Delta$ étant une constante positive.

12. Dispositif pour commander un entraînement de porte avec le procédé selon l'une des revendications 1 à 11, avec des moyens pour déterminer les couples de rotation de l'entraînement de porte (1), avec des moyens pour déterminer les vitesses actuelles de l'entraînement de porte (1), et avec une unité de calcul (3) dans laquelle on peut déterminer pendant un cycle d'apprentissage la variation dans le temps des couples de rotation de l'entraînement de porte (1) pour chaque fois au moins un cycle d'ouverture et un cycle de fermeture, et dans laquelle on peut déduire à partir des couples de rotation déterminés des couples de rotation maximums admissibles pour des zones prédéfinies à l'intérieur d'un cycle d'ouverture et de fermeture, avec une unité de mémoire (4) pour la mémorisation de vitesses de consigne prédéfinies pendant le fonctionnement de l'entraînement de porte ou de portail (1),

une instruction de commande permettant d'augmenter la vitesse actuelle de l'entraînement de porte (1) pouvant être générée par l'unité de calcul (3) si celle-ci devient inférieure à la vitesse de consigne associée pendant le fonctionnement de l'entraînement de porte (1),

et avec des moyens de commutation commandés par l'unité de calcul (3), une instruction de commutation permettant l'arrêt de l'entraînement de porte (1) pouvant être générée dans celle-ci si le couple de rotation actuel dépasse le couple de rotation maximum admissible pendant le fonctionnement de l'entraînement de porte (1).

**13.** Dispositif selon la revendication 12, **caractérisé par le fait que** l'entraînement de porte (1) comprend un moteur électrique.

**14.** Dispositif selon la revendication 13, **caractérisé par le fait que** les moyens pour déterminer le couple de rotation comprennent un circuit de mesure permettant de déterminer l'intensité du courant du moteur électrique.

**15.** Dispositif selon l'une des revendications 13 ou 14, **caractérisé par le fait que** les moyens pour déterminer la vitesse de l'entraînement de porte (1) comprennent un circuit de mesure permettant de déterminer la vitesse de rotation du moteur électrique.

**16.** Dispositif selon l'une des revendications 12 à 15, **caractérisé par le fait que** l'unité de calcul (3) comprend une unité de régulation (5) pour réguler la vitesse de l'entraînement de porte (1).

**17.** Dispositif selon l'une des revendications 12 à 16, **caractérisé par le fait que** l'entraînement de porte (1) comprend des interrupteurs de fin de course (8) en vue de son arrêt dans ses positions extrêmes.

**Fig. 1**

**Fig. 2**

**Fig. 3**

EP 1 602 014 B1

# Fig. 4

12